# EUROPEAN PATENT APPLICATION

(11) **EP 2 610 856 A1**
(43) Date of publication of application: **03.07.2013**
(21) Application number: 12198983.4
(22) Date of filing: 21.12.2012
(51) Int. Cl.: G09G 5/00, G06F 1/16

(54) **Display device**

(30) Priority: 29.12.2011 KR 20110145607; 30.12.2011 KR 20110147950; 30.12.2011 KR 20110147952; 20.04.2012 KR 20120041689
(71) Applicant: Samsung Electronics Co., Ltd, Gyeonggi-do 443-742 (KR)
(72) Inventor: Jung, Chang Joo, Gyeonggi-do (KR); Ryu, Yong Wook, Gyeonggi-do (KR); Choi, Hyun Woong, Gyeonggi-do (KR); Kim, Kwang Youn, Gyeonggi-do (KR); Kim, Hyun Ho, Seoul (KR)
(74) Representative: Brandon, Paul Laurence

(57) **Abstract**

A display device including a display panel to display images, a bezel provided at an outside of the display panel, and a signal input unit including a camera and a microphone, wherein the signal input unit is disposed at an upper end of the bezel, is disclosed. The camera and the microphone are integrated into the display device, thereby improving installation efficiency and external appearance quality of the display device. The microphone is distant from the speaker, thereby improving performance of the microphone.

## Description

### BACKGROUND

### 1. Field

Exemplary embodiments relate to a display device having an audio recognition function, motion recognition function, and video communication function.

### 2. Description of the Related Art

A display device realized by a television (TV) or monitor displays images supplied from an image supply source. A recent display device may receive pictures or images through various external interfaces, such as a universal serial bus (USB) memory or a network, and may display the received pictures or images.

In recent years, there has been proposed a technology of realizing various additional functions, such as an audio recognition function, motion recognition function, and video communication function, in a display device, thereby improving user convenience.

To realize such additional functions, such as an audio recognition function, motion recognition function, and video communication function, the display device may need a signal input unit, such as a camera to capture a video of a user and a microphone to receive a voice of the user, and a signal processing circuit to process a video signal input through the camera and an audio signal input through the microphone.

In the conventional art, to realize such additional functions in the display device, a signal input unit, such as a camera and a microphone, and a signal processing circuit to process an input video signal and audio signal are incorporated into a printed circuit board (PCB) to constitute a signal input/processing module, and the signal input/processing module is mounted outside the display device.

Also, a remote control signal module, including a remote control signal receiver to receive an input signal (infrared signal) of a remote controller to remotely control the operation of the display device and an operation indication light emitting diode (LED) to inform a user that the display device is operated according to the input signal of the remote controller, is provided in the display device. The signal input/processing module is connected to a main microprocessor provided in the display device via an external cable outside the display device, and the remote control signal module is connected to the main microprocessor provided in the display device via an internal cable inside the display device.

In the conventional art, however, a proper fixing unit is not provided between the camera and the display device. As a result, it may be difficult to install the camera.

Also, in the conventional art, the microphone is provided separately from the display device. As a result, the microphone may be separated from the display device due to impact during movement of a product. In addition, an additional fixing unit to fix the microphone may be needed.

Also, in the conventional art, both the signal input unit (camera and microphones) and the signal processing circuit are incorporated into one board. As a result, the size of the module (board) mounted outside the display device is increased, thereby deteriorating external appearance quality and restricting compact design of the board. Also, in the conventional art, the signal input/processing module and the remote control signal module are separately mounted to the display device. As a result, spaces occupied by the signal input/processing module and the remote control signal module are increased, and the cable connected to the main microprocessor in the display device may be separated.

### SUMMARY

It is an aspect of an exemplary embodiment to provide a display device wherein a camera and a microphone are integrated into the display device, thereby improving installation efficiency.

It is another aspect of an exemplary embodiment to provide a display device wherein a microphone is distant from a speaker, thereby improving performance of the microphone.

It is another aspect of an exemplary embodiment to provide a display device wherein a circuit module to process a video captured by a camera is adjacent to the camera, thereby preventing deterioration of a video signal.

It is another aspect of an exemplary embodiment to provide a display device wherein a signal input unit including a camera, a microphone, and a remote control signal module is mounted outside the display device, and a single processing unit to process an input video signal and audio signal is mounted inside the display device, thereby improving external appearance quality of the display device.

It is another aspect of an exemplary embodiment to provide a display device wherein a signal input unit including a camera and a microphone and a single processing unit (realized by a board) to process an input video signal and audio signal are separately configured and are connected to each other via a cable, thereby achieving compact design of the board.

It is another aspect of an exemplary embodiment to provide a display device wherein the length of a cable connected between a signal input unit including a camera and a microphone and a single processing unit (realized by a board) to process an input video signal and audio signal is adjustable, thereby flexibly corresponding to mechanical characteristics of the display device.

It is another aspect of an exemplary embodiment to provide a display device wherein a remote control signal module is incorporated into a signal input unit including a camera and a microphone, thereby reducing a space occupied by the remote control signal module in the display device.

It is a further aspect of an exemplary embodiment to provide a display device wherein a remote control signal module is incorporated into a signal input unit including a camera and a microphone, thereby integrating a cable connected to a main microprocessor in the display device.

Additional aspects of exemplary embodiments will be set forth in part in the description which follows and, in part, will be obvious from the description, or may be learned by practice of the invention.

In accordance with one aspect of an exemplary embodiment, a display device includes a display panel to display images, a bezel provided at an outside of the display panel, and a signal inputter including a camera and a microphone, wherein the signal inputter is disposed at an upper part of the bezel.

The signal inputter may be disposed at a middle of the upper part of the bezel.

The display device may further include a signal processor configured to drive the camera, wherein the signal processor may be disposed at a lower side of the camera. The signal processor may be disposed less than 100 mm from the camera.

The display device may further include one of a cable and flexible printed circuit board (FPCB) connected between the signal inputter and the signal processor.

The FPCB may have a length of 100 mm or less.

The display device may further include speakers provided at opposite side ends of the display device, wherein the microphone may be distant from the speakers.

The display device may further include a rear case forming a rear of the display panel, wherein the signal processor may be installed between the display panel and the rear case.

The signal inputter may include a case, in which the camera and the microphone are installed, forming an external appearance, and the case may be provided with a plurality of microphone holes.

The display device may further include an angle adjuster which adjusts an angle of view of the camera, wherein the angle adjuster may include a rotatable wheel and a gear unit to transmit rotation of the rotatable wheel to the camera.

In accordance with another aspect of an exemplary embodiment, a display device includes a display panel to display images, a bezel forming an edge of the display panel, a camera and a microphone provided at an upper part of the bezel, and a speaker provided at a lower part of the bezel, wherein the microphone is most distant from the speaker.

The display device may further include a signal processor configured to drive the camera, wherein the signal processor may be disposed at a lower side of the camera. The signal processor may be disposed less than 100 mm from the camera.

The display device may further include one of a cable and flexible printed circuit board (FPCB) connected between the camera and the signal processor, wherein the FPCB may have a length of 100 mm or less.

In accordance with another aspect of an exemplary embodiment, a display device include a main body having an audio/video (AV) signal processor configured to process an audio/video (AV) signal, a display panel mounted to a front of the main body to display video information processed by the AV signal processor, a signal inputter including a camera mounted outside the main body to capture a user and acquire a video signal and a microphone mounted outside the main body to receive a voice of the user and acquire an audio signal, and a signal processor mounted inside the main body to receive and process the video signal and the audio signal acquired through the signal inputter.

In accordance with another aspect of an exemplary embodiment, a display device includes a main body, a display panel mounted to a front of the main body to display video information, a signal inputter mounted outside the main body to acquire a video signal and an audio signal, and a signal processor mounted inside the main body to receive and process the video signal and the audio signal acquired through the signal inputter.

The signal inputter and the signal processor may be connected to each other via a cable.

The signal inputter may include a camera to capture an object and acquire a video signal of the object and a microphone to receive an audio signal of the object.

The signal inputter may include a case, in which the camera and the microphone are mounted, and the case may be provided with a plurality of microphone holes.

The signal input unit may further include an angle adjuster which adjusts an angle of view of the camera.

The signal processor may include a video signal processor configured to receive the video signal of the object captured by the camera and to perform video processing on the received video signal and an audio signal processor configured to receive the audio signal of the object input through the microphone and to perform audio processing on the received audio signal.

The video signal of the object captured by the camera may be transmitted to the video signal processor via a cable, and the audio signal of the object input through the microphone may be transmitted to the audio signal processing unit via the cable.

The signal processor may further include a system controller configured to receive the video signal processed by the video signal processor and the audio signal processed by the audio signal processor and to perform at least one from among audio recognition and motion recognition.

In accordance with another aspect of an exemplary embodiment, a display device includes a signal inputter mounted at an upper part of a main body to acquire a video signal and an audio signal and a signal processor disposed inside the main body to receive and process the video signal and the audio signal acquired by the signal inputter.

The signal inputter and the signal at the processor may be connected to each other via a cable.

The signal inputter may include a camera to capture an object and acquire a video signal of the object and a microphone to receive an audio signal of the object.

The signal processor may include a video signal processor configured to receive the video signal of the object captured by the camera and to perform video processing on the received video signal and an audio signal processor configured to receive the audio signal of the object input through the microphone and to perform audio processing on the received audio signal.

The video signal of the object captured by the camera may be transmitted to the video signal processor via a cable, and the audio signal of the object input through the microphone may be transmitted to the audio signal processor via the cable.

In accordance with another aspect of an exemplary embodiment, a display device includes a main body, a display panel mounted to a front of the main body to display video information, and a signal inputter including a camera mounted outside the main body to capture an object and acquire a video signal of the object, a microphone mounted outside the main body to receive an audio signal of the object, and a remote control signal module to receive a remote control signal.

The display device may further include a signal processor mounted inside the main body to receive and process the video signal and the audio signal acquired through the signal inputter.

The remote control signal module may include a remote control signal receiver which receives a remote control signal corresponding to user input and an operation indication light emitting diode (LED) which informs a user that the display device is operated according to the remote control signal.

The signal inputter and the signal processor may be connected to each other via a cable.

The signal inputter may include a case, in which the camera and the microphone are mounted, and the case may be provided with a plurality of microphone holes.

The signal inputter may further include an angle adjuster which adjusts an angle of view of the camera.

The signal processor may include a video signal processor configured to receive the video signal of the object captured by the camera and to perform video processing on the received video signal and an audio signal processor configured to receive the audio signal of the object input through the microphone and to perform audio processing on the received audio signal.

The video signal of the object captured by the camera may be transmitted to the video signal processor via the cable, and the audio signal of the object input through the microphone may be transmitted to the audio signal processor via the cable.

The display device may further include a main microprocessor configured to control overall operation of the display device, wherein the remote control signal module may be connected to an internal cable, connected between the signal processor and the main microprocessor, via a cable.

In accordance with a further aspect of the present invention, a display device includes a main body and a signal inputter including at least a camera, a microphone, and a remote control signal module, wherein the signal inputter is mounted at an upper part of the main body.

The remote control signal module may include a remote control signal receiver which receives a remote control signal corresponding to user input and an operation indication light-emitting diode (LED) which informs the user that the display device is operated according to the remote control signal.

The display device may further include a signal processor mounted inside the main body to process a video signal and an audio signal acquired through the camera and the microphone.

### BRIEF DESCRIPTION OF THE DRAWINGS

These and/or other aspects of exemplary embodiments will become apparent and more readily appreciated from the following description, taken in conjunction with the accompanying drawings of which:
FIG. 1 is a view schematically showing the front of a display device according to an exemplary embodiment;
FIG. 2 is a view schematically showing the rear of the display device according to an exemplary embodiment;
FIG. 3 is an enlarged view of "A" portion shown in FIG. 2;
FIG. 4 is a perspective view schematically showing a signal input unit of the display device according to an exemplary embodiment;
FIG. 5 is a view showing the rear of the display device according to an exemplary embodiment in more detail;
FIG. 6 is a view showing the external appearance of a display device according to another exemplary embodiment;
FIG. 7 is a view showing the external structure of a signal input unit of the display device according to an exemplary embodiment;
FIG. 8 is a longitudinal sectional view showing the internal structure of the signal input unit of the display device according to an exemplary embodiment; and
FIG. 9 is a view showing the construction of a signal processing unit of the display device according to an exemplary embodiment.

### DETAILED DESCRIPTION

Reference will now be made in detail to the exemplary embodiments, examples of which are illustrated in the accompanying drawings, wherein like reference numerals refer to like elements throughout.

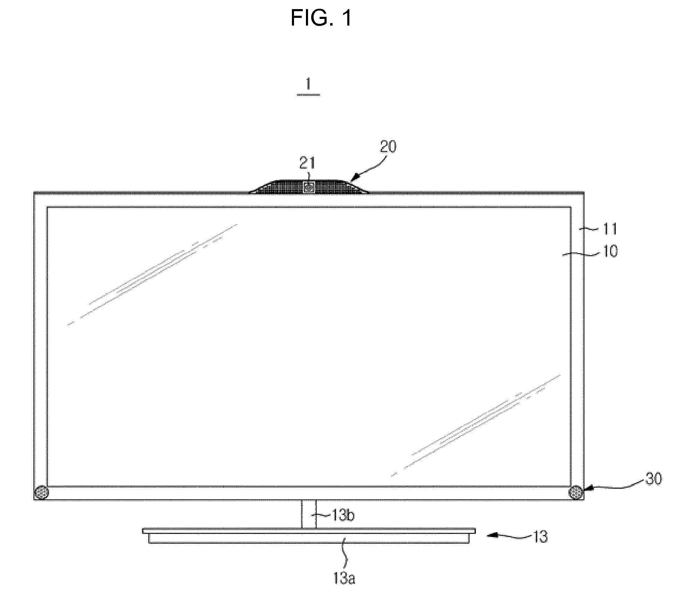

FIG. 1 is a view schematically showing the front of a display device 1 according to an exemplary embodiment.

As shown in FIG. 1, the display device 1 includes a display panel 10 to display video information, a bezel 11 disposed at the outside of the edge of the display panel 10, and a stand 13 to fix the display panel 10 and the bezel 11.

Generally, the display panel 10 is formed by injecting a liquid crystal layer between two glass substrates, i.e. a thin film transistor (TFT) substrate and a color filter substrate.

The bezel 11 is provided at four sides of the display panel 10 to receive the edge of the display panel 10.

The stand 13 includes a flat support part 13a to support the display panel 10 and the bezel 11 and a connection part 13b extending upward from the support part 13a and fixed to the bezel 11 provided at the lower side of the display panel 10.

A speaker 30 to output sound is installed at the lower part of the bezel 11. The speaker 30 may be provided at each side of the bezel 11.

A signal input unit 20 is installed at the middle of the upper part of the bezel 11.

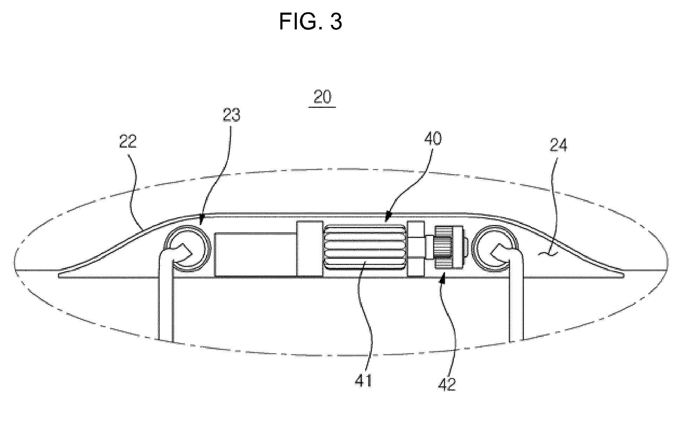

The signal input unit 20 includes a camera 21 and a microphone 23 (see FIG. 3).

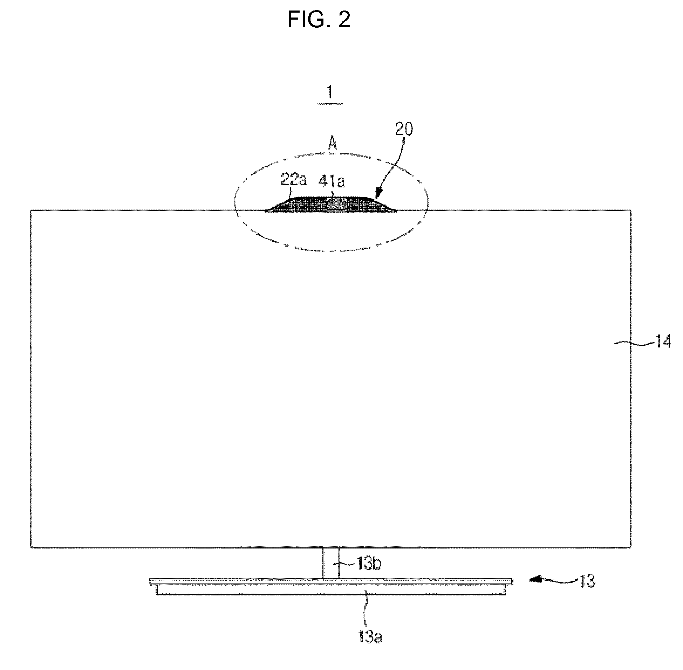

FIG. 2 is a view schematically showing the rear of the display device according to an exemplary embodiment, FIG. 3 is an enlarged view of "A" portion shown in FIG. 2, and

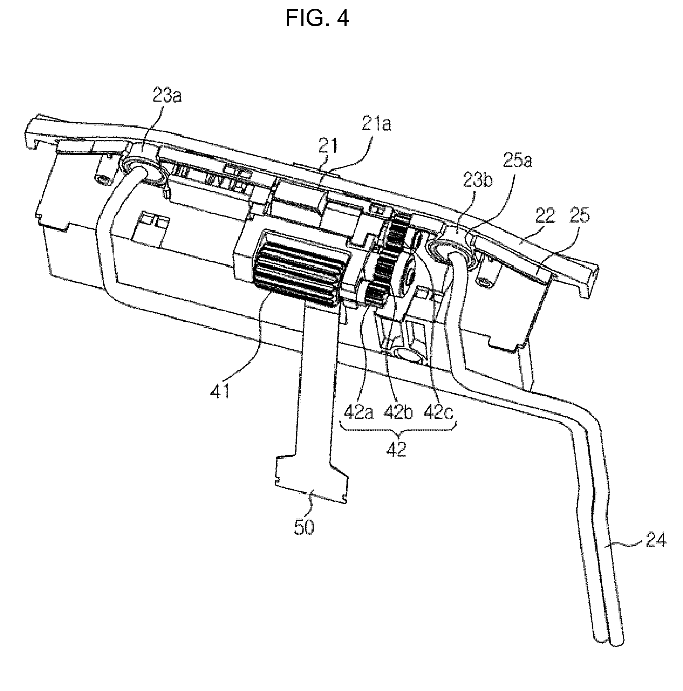

FIG. 4 is a perspective view schematically showing the signal input unit of the display device according to the exemplary embodiment.

As shown in FIGS. 2 to 4, the signal input unit 20 includes a case 22 having a space 24 in which the camera 21 and the microphone 23 are installed and an angle adjustment unit 40 to adjust an angle of view of the camera 21.

A microphone hole 22a for audio signal reception of the microphone 23 is formed at the outside of the case 22 installed at the middle of the upper part of the bezel 11.

A plurality of microphone holes 22a may be formed at the front and rear of the case 22 to receive all sounds from the front and rear of the display device 1.

A camera installation hole 21 a, in which the camera 21 is installed, is formed at the middle of the front of the case 22.

An installation bracket 25, to which the microphone 23, the camera 21, and the angle adjustment unit 40 are installed, is provided in the front inside space 24 of the case 22. Circular microphone installation holes 25a are formed at opposite ends of the installation bracket 25

The microphone 23 includes a first microphone 23a provided at one side of the camera 21 and a second microphone 23b provided at the other side of the camera 21. The microphone 23 is located at the middle of the upper end of the display device 1 so that the microphone 23 is isolated from the speakers 30 located at the opposite ends of the lower side of the display device. As a result, sound output from the speakers 30 is prevented from being mixed with sound input through the microphone 23.

Consequently, the performance of the microphone 23 is further improved.

The angle adjustment unit 40, which adjusts an angle of view of the camera 21, includes a rotatable wheel 41 and a gear unit 42 to transmit rotation of the wheel 41 to the camera 21 so that the camera 21 is rotated upward and downward.

The wheel 41 is formed in a cylindrical shape. A plurality of protrusions 41 a extending in the lateral direction is formed in the circumferential direction.

The wheel 41 is partially exposed through the rear of the case 22. A user may rotate the wheel 41 using the protrusions 41 a formed at the outside of the exposed wheel 41 to adjust an angle of view of the camera 21.

The gear unit 42 is connected to one side of the wheel 41.

The gear unit 42 includes a first gear 42a connected to one side of the wheel 41 to rotate the wheel 41, a third gear 42c connected to one side of the camera 21 to rotate the camera 21, and a second gear 42b provided between the first gear 42a and the third gear 42c.

The first gear 42a, the second gear 42b, and the third gear 42c may be reduction gears to adjust rotational speed of the camera 21 according to a reduction gear ratio.

When the user rotates the wheel 41 provided at the rear of the display panel 10 to adjust an angle of view of the camera 21, therefore, the first gear 42a connected to the wheel 41 is rotated, the second gear 42b connected to the first gear 42a is rotated, the third gear 42c connected to the second gear 42b is rotated, and the camera 21 connected to the third gear 42c is rotated simultaneously when the third gear 42c is rotated.

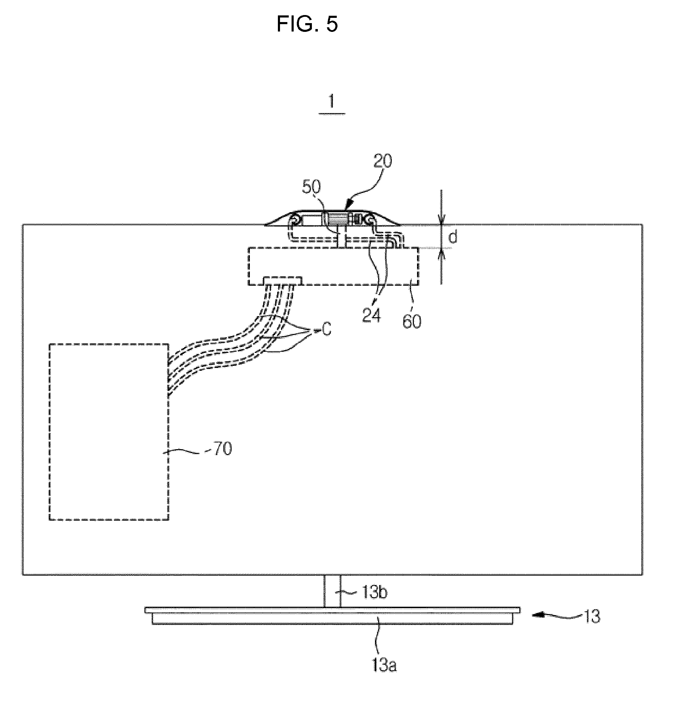

As shown in FIG. 5, the display device 1 according to the exemplary embodiment includes a signal processing unit 60 to realize a video communication function and an audio recognition function.

The camera 21 is connected to the signal processing unit 60 via a flexible printed circuit board (FPCB) 50, and the microphone 23 is connected to the signal processing unit 60 via a microphone cable 24.

The signal processing unit 60 may be disposed at a position nearest to the lower part of the camera 21. The distance d may be less than 100 mm.

Also, the length of the FPCB 50 connected between the signal processing unit 60 and the camera 21 may be 100 mm or less.

When the length of the FPCB 50 is 100 mm or less, characteristics of the FPCB 50 are not deteriorated.

The display device includes a rear case 14 forming the rear of the display panel 10. The signal processing unit 60 is installed between the display panel 10 and the rear case 14.

The display panel 10 includes a main microprocessor 70 to drive the display device 1. The signal processing unit 60, connected to the signal input unit 20, is connected to the main microprocessor 70 via a cable C.

Consequently, the signal processing unit 60, connected to the camera 21 and the microphone 23, the microphone cable 24, and the FPCB 50 are covered by the rear case 14, thereby improving external appearance quality of the display device 1.

Also, since the signal processing unit 60 may be disposed at a position nearest to the lower part of the camera 21, the camera 21 may be optimized without deterioration of performance.

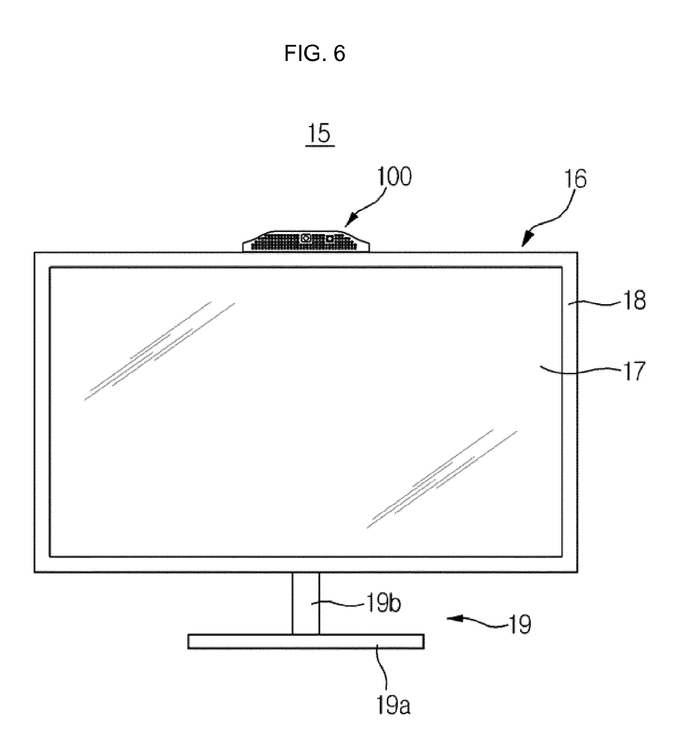

FIG. 6 is a view showing the external appearance of a display device 15 according to another exemplary embodiment.

As shown in Fig. 6, the display device 15 according to an exemplary embodiment includes a main body 16 forming the external appearance of the display device 15, a display panel 17 mounted to the front of the main body 16 to display video information, a bezel 18 disposed at the outside of the edge of the display panel 17, and a stand 19 to fix the display panel 17 and the bezel 18.

A thin film transistor liquid crystal display (TFT-LCD) formed by injecting a liquid crystal layer between two glass substrates, i.e. a color filter substrate and a thin film transistor (TFT) substrate, is used as the display panel 17.

The bezel 18 is provided at four sides of the display panel 17 to receive the edge of the display panel 17.

The stand 19 includes a flat support part 19a to support the main body 16 and a connection part 19b extending upward from the support part 19a and fixed to the bezel 18 provided at the lower side of the display panel 17.

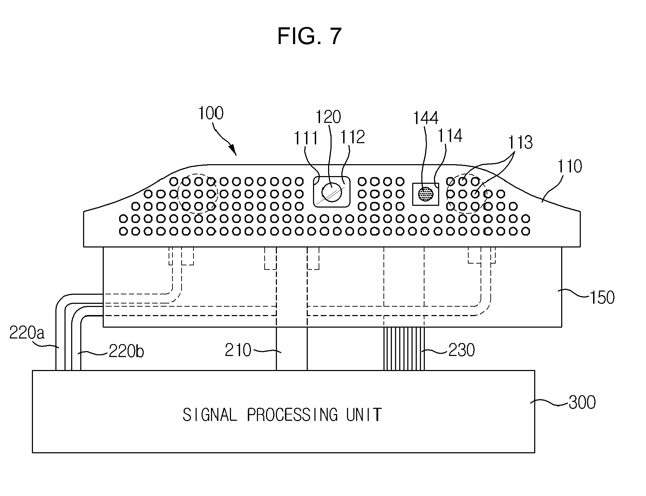

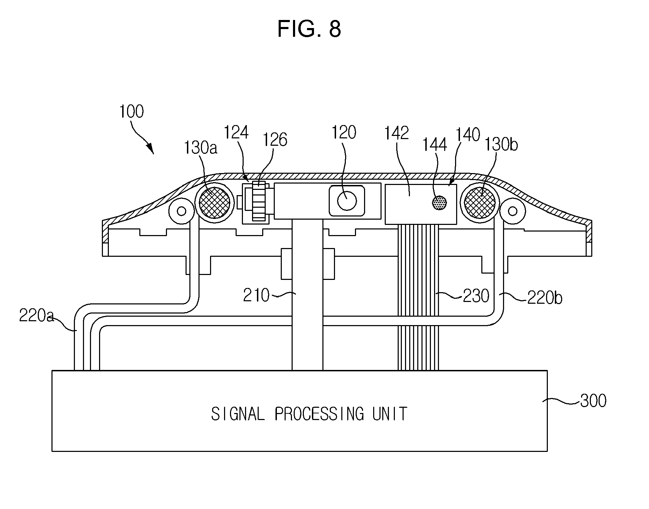

At the upper end of the main body 16 is mounted a signal input unit 100 including a camera 120 (see FIG. 8), microphones 130a and 130b (see FIG. 8), and a remote control signal module 140 (see FIG. 8). The structure of the signal input unit 100 will hereinafter be described in detail with reference to FIGS. 7 and 8.

FIG. 7 is a view showing the external structure of the signal input unit of the display device according to an exemplary embodiment, and FIG. 8 is a longitudinal sectional view showing the internal structure of the signal input unit of the display device according to the exemplary embodiment.

As shown in FIGS. 7 and 8, the signal input unit 100 includes a case 110 forming the external appearance thereof.

The case 110 is hollow so that the camera 120, the microphones 130a and 130b, and the remote control signal module 140 are installed in the case 110. At the outside of the case 110 is formed a microphone hole 113 for audio signal reception of the microphones 130a and 130b installed in the case 110.

A plurality of microphone holes 113 may be formed at the front and rear of the case 110.

The case 110 is provided at the front thereof with a camera installation hole 111 formed at a position corresponding to the installation position of the camera 120.

A front plate 112 to protect the camera 120 is installed at the camera installation hole 111. The front plate 112 may be formed of transparent plastic or glass.

Also, the case 110 is provided at the right side thereof with a light emitting diode (LED) installation hole 114 formed at a position corresponding to the installation position of an operation indication LED 144. The operation indication LED 144 indicates the result of user manipulation with respect to an input signal (infrared signal) of a remote controller (not shown) to remotely control the operation of the display device 15.

A coupling protrusion 150 is provided under the case 110. The coupling protrusion 150 is inserted into a coupling groove (not shown) provided at the upper part of the bezel 18 so that the signal input unit 100 is coupled to the display panel 17.

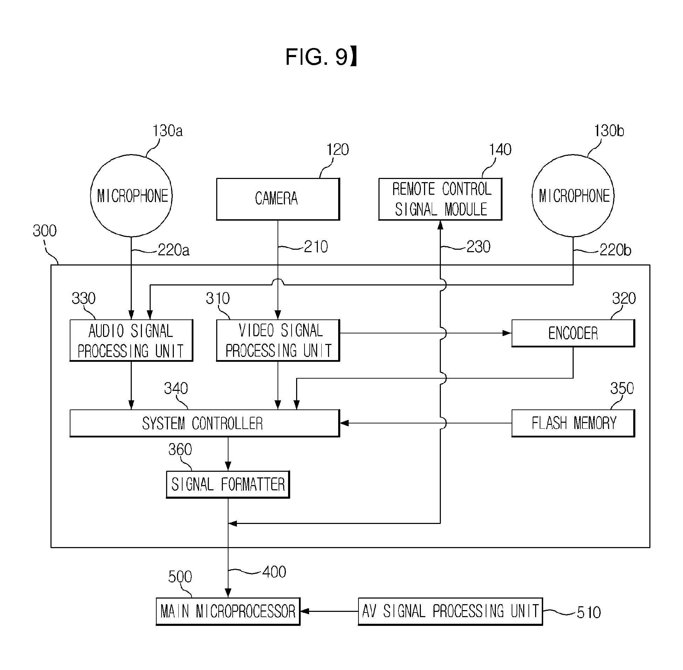

The camera 120 and the microphones 130a and 130b, installed in the case 110, are connected to a signal processing unit 300 via cables 210 and 220a and 220b. The signal processing unit 300 processes a video signal input through the camera 120 and an audio signal input through the microphones 130a and 130b. The signal processing unit 300 is realized by a printed circuit board (PCB). The construction of the signal processing unit 300 will be described in detail with reference to FIG. 9.

In the display device 15 according to an exemplary embodiment, the signal input unit 100, including the camera 120, the microphones 130a and 130b, and the remote control signal module 140, are mounted outside the display device 15, and the signal processing unit 300, processing a video signal and an audio signal input through the signal input unit 100, is mounted inside the display device 15, thereby improving external appearance quality of the display device 15.

Also, the remote control signal module 140 may be incorporated into the signal input unit 100, including the camera 120 and the microphones 130a and 130b. As a result, a space occupied by the remote control signal module 140 in the display device 15 is reduced.

Hereinafter, the internal structure of the signal input unit 100 will be described in more detail. As shown in FIG. 8, the camera 120, an angle adjustment unit 124 to adjust an angle of view of the camera 120, the microphones 130a and 130b, and the remote control signal module 140 are installed in the case 110 of the signal input unit 100. The camera 120 is installed in the case 110 at the middle thereof to capture an object (mainly a user) and to transmit a video signal of the captured object to a video signal processing unit 310 (see FIG. 9) in the signal processing unit 300 via the cable 210. The angle adjustment unit 124 includes a rotatable wheel 126 and a gear unit (not shown) to transmit rotation of the wheel 126 to the camera 120 so that the camera 120 is rotated upward and downward.

The wheel 126 is formed in a cylindrical shape. At the rear of the case 110 is formed a wheel installation hole (not shown), through which a portion of the cylindrical wheel is exposed.

Consequently, a user may rotate the wheel 126 exposed at the rear of the case 110 to adjust an angle of view of the camera 120.

The microphones 130a and 130b are installed in the case 110 at left and right sides thereof to receive an audio signal of an object (mainly a user) and to transmit the audio signal to an audio signal processing unit 330 (see FIG. 9) in the signal processing unit 300 via the cables 220a and 220b.

The remote control signal module 140 includes a remote control signal receiver 142 and the operation indication LED 144.

The remote control signal receiver 142 receives a remote control signal corresponding to user input. A user may change channel, adjust volume, or set environments of the display device 15 using a remote controller (not shown). An infrared signal is generally used as the remote control signal. Alternatively, other wireless communication signals may be used as the remote control signal. When the user inputs a command using the remote controller, the remote controller transmits a remote control signal corresponding to the user input. The remote control signal receiver 142 receives and decode the remote control signal and transmits the decoded control signal to a main microprocessor 500 (see FIG. 9) to control overall operation of the display device 15.

The operation indication LED 144 is provided at one side of the remote control signal receiver 142 to indicate that the display device 15 is operated according to an input signal of the remote controller (not shown) to remotely control the operation of the display device 15.

FIG. 9 is a view showing the construction of the signal processing unit of the display device according to an exemplary embodiment.

As shown in FIG. 9, the signal processing unit 300 of the display device according to an exemplary embodiment includes a video signal processing unit 310, an encoder 320, an audio signal processing unit 330, a system controller 340, a flash memory 350, and a signal formatter 360.

The video signal processing unit 310 receives a video signal of an object captured by the camera 120 through the camera cable 210 and performs video processing on the received video signal. The video signal processing unit 310 may include a scaler (not shown) to convert the received video signal to a specific vertical frequency, resolution, and an aspect ratio based on resolution of the display panel 17 and to output a scaled video signal, an analog/digital (A/D) converter (not shown) to convert the analog video signal received through the cable 210 into a digital video signal, a decoder (not shown) to decode the digital video signal, and a format converter (not shown) to perform a predetermined format conversion.

The encoder 320 encodes a video signal processed by the video signal processing unit 310. The encoder 320 encodes a video signal using a motion video compression algorithm (for example, MPEG4).

The audio signal processing unit 330 receives an audio signal of an object input through the microphones 130a and 130b, through the microphone cables 220a and 220b and performs audio processing on the received audio signal. The audio signal processing unit 330 may include an A/D converter (not shown) to convert the analog audio signal received through the microphone cables 220a and 220b into a digital audio signal, an audio amplifier (not shown) to amplify the received audio signal, a lever adjuster (not shown) to adjust output level of the audio signal, and a frequency adjuster (not shown) to compensate a frequency of the audio signal.

The system controller 340 applies an audio recognition algorithm, motion recognition algorithm, and video communication algorithm to the video signal processed by the video signal processing unit 310 or the audio signal processed by the audio signal processing unit 330 to analyze the video signal transmitted from the video signal processing unit 310 or the audio signal transmitted from the audio signal processing unit 330. The system controller 340 loads the audio recognition algorithm, motion recognition algorithm, and video communication algorithm from the flash memory 350, in which the audio recognition algorithm, motion recognition algorithm, and video communication algorithm are stored, to recognize a command on the operation or function of the display device 15 desired by a user from the video signal transmitted from the video signal processing unit 310 or the audio signal transmitted from the audio signal processing unit 330. The system controller 340 outputs commands on the functions recognized from the video signal and the audio signal to the signal formatter 360.

The flash memory 350 stores the audio recognition algorithm, motion recognition algorithm, and video communication algorithm.

Audio recognition is to recognize a meaning of an audio signal input using the result of comparison between a test audio signal obtained from a human voice and a reference audio signal obtained by sampling various human voices and then stored in the system or directly stored in the system by a user. A dynamic time warping (DTW) method and a hidden Markov model (HMM) method are widely used as an audio recognition method. The DTW method is mainly used for isolated word recognition, and the HMM method is used for connected word recognition. The audio recognition method is well known in the art to which the present invention pertains, and therefore, a detailed description thereof will be omitted.

Meanwhile, motion (gesture) recognition is to recognize motion (gesture) of a user based on dynamic video information acquired from the camera 120.

The signal formatter 360 changes results of the audio recognition or motion recognition transmitted from the system controller 340, i.e. commands on the operation or function of the display device 15 recognized from the input audio signal or video signal, into a signal format that may be recognized by the main microprocessor 500 and outputs the commands to the main microprocessor 500.

The signal processing unit 300 is connected to the main microprocessor 500 of the display device 15 via an internal cable 400. The remote control signal module 140 is connected to the internal cable 400, connected between the signal processing unit 300 and the main microprocessor 500, via a remote control signal cable 230. As a result, the cable 400 connected to the main microprocessor 500 in the display device 15 may be integrated.

The main microprocessor 500 controls overall operation of the display device 15. The main microprocessor 500 receives commands on the operation or function of the display device 15 transmitted from the signal formatter 360 through the internal cable 400 to control functions of corresponding function blocks (not shown).

Also, the main microprocessor 500 receives commands on the operation or function of the display device 15 transmitted from the remote control signal receiver 142 through the cables 230 and 400 to control functions of corresponding function blocks (not shown).

An AV signal processing unit 510 is disposed in the main body 16 to receive an external broadcast signal or an AV signal of an optical disc device, to divide the received AV signal into a video signal and an audio signal, and to individually process the divided signals.

In the above exemplary embodiment, the signal input unit 100 including the camera 120 and the microphones 130a and 130b is installed at the upper end of the main body 16. However, the installation position of the signal input unit 100 is not particularly restricted. For example, the lengths of the cables 210, 220a, and 220b, connected between the signal input unit 100 and the signal processing unit 300, may be adjusted so that the signal input unit 100 may be installed at one side of the bezel 18 or one side of the stand 19 to receive a video signal or an audio signal.

That is, in the structure of the display device 15 according to the above exemplary embodiment, the lengths of the cables 210, 220a, and 220b, connected between the signal input unit 100 to receive a video signal and an audio signal and the signal processing unit 300 to process the video signal and the audio signal, may be changed to flexibly correspond to mechanical characteristics (for example, size and shape) of the display device 15.

According to the proposed display device, a camera and a microphone are integrated into the display device, thereby improving installation efficiency.

According to the proposed display device, a microphone is distant from a speaker, thereby improving performance of the microphone.

According to the proposed display device, a circuit module to process a video captured by a camera is adjacent to the camera, thereby preventing deterioration of a video signal.

According to the proposed display device, a signal input unit including a camera, a microphone, and a remote control signal module is mounted outside the display device, and a single processing unit to process an input video signal and audio signal is mounted inside the display device, thereby improving external appearance quality of the display device.

According to the proposed display device, a signal input unit including a camera and a microphone and a single processing unit (realized by a board) to process an input video signal and audio signal are separately configured and are connected to each other via a cable, thereby achieving compact design of the board.

According to the proposed display device, the length of a cable connected between a signal input unit including a camera and a microphone and a single processing unit (realized by a board) to process an input video signal and audio signal is adjustable, thereby flexibly corresponding to mechanical characteristics of the display device. According to the proposed display device, a remote control signal module is incorporated into a signal input unit including a camera and a microphone, thereby reducing a space occupied by the remote control signal module in the display device. According to the proposed display device, a remote control signal module is incorporated into a signal input unit including a camera and a microphone, thereby integrating a cable connected to a main microprocessor in the display device. Although a few exemplary embodiments have been shown and described, it would be appreciated by those skilled in the art that changes may be made in these exemplary embodiments without departing from the principles and spirit of the invention, the scope of which is defined in the claims and their equivalents.

## Claims

1. A display device comprising:
a display panel to display images;
a bezel provided at an outside of the display panel; and
a signal inputter comprising a camera and a microphone, wherein
the signal inputter is disposed at an upper part of the bezel.

2. The display device according to claim 1, wherein the signal inputter is disposed at a middle of the upper part of the bezel.

3. The display device according to claim 1, further comprising a signal processor configured to drive the camera, wherein the signal processor is disposed at a lower side of the camera.

4. The display device according to claim 3, wherein the signal processor is disposed less than 100 mm from the camera.

5. The display device according to claim 3, further comprising one of a cable and flexible printed circuit board (FPCB) connected between the signal inputter and the signal processor.

6. The display device according to claim 5, wherein the FPCB has a length of 100 mm or less.

7. The display device according to claim 1, further comprising speakers provided at opposite side ends of the display device, wherein the microphone is distant from the speakers.

8. The display device according to claim 3, further comprising a rear case forming a rear of the display panel, wherein the signal processor is installed between the display panel and the rear case.

9. The display device according to claim 8, wherein
the signal inputter comprises a case, in which the camera and the microphone are installed, and
the case is provided with a plurality of microphone holes.

10. The display device according to claim 1, further comprising an angle adjuster which adjusts an angle of view of the camera, wherein the angle adjuster comprises:
a rotatable wheel; and
a gear unit to transmit rotation of the rotatable wheel to the camera.

11. A display device comprising:
a main body having an audio/video (AV) signal processor configured to process an AV signal;
a display panel mounted to a front of the main body to display video information processed by the AV signal processor;
a signal inputter comprising a camera mounted outside the main body to capture a user and acquire a video signal, and a microphone mounted outside the main body to receive a voice of the user and acquire an audio signal; and
a signal processor mounted inside the main body to receive and process the video signal and the audio signal acquired through the signal inputter.

12. A display device comprising:
a main body;
a display panel mounted to a front of the main body to display video information;
a signal inputter mounted outside the main body to acquire a video signal and an audio signal; and
a signal processor mounted inside the main body to receive and process the video signal and the audio signal acquired through the signal inputter.

13. A display device comprising:
a main body;
a display panel mounted to a front of the main body to display video information; and
a signal inputter comprising a camera mounted outside the main body to capture an object and acquire a video signal of the object, a microphone mounted outside the main body to receive an audio signal of the object, and a remote control signal module to receive a remote control signal.

14. The display device according to claim 13, wherein the remote control signal module comprises:
a remote control signal receiver which receives a remote control signal corresponding to user input; and
an operation indication light emitting diode (LED) which informs a user that the display device is operated according to the remote control signal.

15. A display device comprising:
a main body; and
a signal inputter comprising at least a camera, a microphone, and a remote control signal module, wherein
the signal inputter is mounted at an upper part of the main body.
